# FASCICULE DE BREVET EUROPEEN

(11) **EP 2 498 938 B1**
(45) Date de publication et mention de la délivrance du brevet: **13.11.2013**
(21) Numéro de dépôt: 10774000.3
(22) Date de dépôt: 22.10.2010
(51) Int. Cl.: B23B 31/08, B23G 3/00, B23G 1/18

(54) **UNITÉ DE TARAUDAGE A MOYENS DE PROTECTION**
GEWINDEBOHRER MIT SCHUTZMITTEL
TAPPING UNIT WITH PROTECTION MEANS

(30) Priorité: 13.11.2009 FR 0958032
(43) Date de publication de la demande: 19.09.2012
(73) Titulaire: Pronic, 74970 Marignier (FR)
(72) Inventeur: PECASTAING, Matthieu, F-74570 Groisy (FR); TISSOT, Julien, F-74570 Groisy (FR)
(74) Mandataire: Poncet, Jean-François
(86) Numéro de dépôt international: PCT/IB2010/054805
(87) Numéro de publication internationale: WO 2011/058468

(56) Documents cités:
- EP-A1- 1 238 737
- DE-A1- 19 729 263
- FR-A1- 2 124 172
- FR-A1- 2 798 308
- FR-A5- 2 177 211

## Description

### DOMAINE TECHNIQUE DE L'INVENTION

La présente invention concerne une unité de taraudage destinée à être montée sur une machine d'usinage. L'invention concerne notamment une unité de taraudage pouvant être utilisée sur une machine d'usinage assurant un ou plusieurs usinages de pièces en continu.

Par exemple, une telle unité de taraudage peut être utilisée sur une presse de formage de pièces, pour réaliser un ou plusieurs taraudages sur la pièce.

De façon connue, une unité de taraudage comprend :
- un carter destiné à être fixé au regard d'une pièce à usiner sur un support d'une machine d'usinage telle qu'une presse, et ayant un logement intérieur,
- une patronne, comprenant une douille à alésage taraudé, engagée dans le logement intérieur du carter et retenue en rotation par des moyens de blocage,
- un porte-taraud, comportant des moyens pour recevoir et retenir un taraud, muni d'un tronçon fileté engagé fonctionnellement dans l'alésage taraudé de la patronne, et comportant un tronçon d'entraînement,
- un arbre d'entraînement, monté rotatif dans le carter, comportant un alésage recevant en coulissement longitudinal le tronçon d'entraînement du porte-taraud, et sollicité en rotation par une transmission mécanique actionnée par un moteur.

Des documents EP 1 238 737 et DE 197 29 263, on connaît une unité de taraudage à patronne engagée axialement à coulissement dans le carter, comprenant en outre des moyens de protection pour autoriser, en cas de poussée axiale excessive exercée sur le taraud par la pièce à usiner, un déplacement axial de retrait de la patronne vers l'intérieur du carter depuis une position de référence jusque dans une première position proximale de recul selon une première course de pénétration déterminée pendant laquelle des premiers moyens de rappel élastiques rappellent en permanence la patronne vers sa position de référence.

Une telle unité de taraudage permet de limiter les risques de casse de taraud lorsque le taraud ne se trouve pas en parfaite correspondance avec le trou à tarauder.

Cependant, pour effectuer un taraudage correct, les premiers moyens de rappel élastiques doivent maintenir en permanence la patronne dans sa position de référence selon une force importante, voisine par exemple de 600 N environ. L'espace disponible étant très limité, les premiers moyens de rappel élastiques présentent une raideur relativement importante pour assurer ce maintien.

Il en résulte que la première course de pénétration est très limitée en amplitude par rapport à la longueur des moyens de rappel élastiques. En effet, au-delà d'une certaine course de pénétration, la force de rappel exercée par les premiers moyens de rappel élastiques deviendrait si grande que soit le taraud serait brisé, soit le taraud serait forcé de pénétrer dans le trou à tarauder selon une orientation incorrecte, par exemple légèrement oblique, ce qui conduirait à la réalisation d'un taraudage défectueux et/ou à un endommagement du taraud, défauts qui peuvent ne pas être détectés. Il y a donc malgré tout un risque important de bris du taraud et/ou un risque de produire de nombreux taraudages défectueux sans même s'en apercevoir.

Enfin, si le taraud ne se brise pas mais vient à être immobilisé en rotation par son appui contre la pièce à tarauder, des éléments mécaniques des moyens d'entraînement en rotation du taraud peuvent être endommagés et/ou brisés.

### EXPOSE DE L'INVENTION

La présente invention vise à remédier aux inconvénients précités de l'art antérieur, et vise plus particulièrement à concevoir une unité de taraudage à moyens de protection permettant un déplacement axial de retrait plus important tout en limitant efficacement les risques de bris de taraud, et/ou de malfaçon des taraudages, et/ou de dégradation des moyens d'entraînement en rotation du taraud.

Pour atteindre ces buts ainsi que d'autres, l'invention propose une unité de taraudage, comprenant :
- un carter destiné à être fixé au regard d'une pièce à usiner sur un support d'une machine d'usinage telle qu'une presse, et ayant un logement intérieur,
- une patronne, comportant une douille à alésage taraudé, engagée axialement à coulissement dans le logement intérieur du carter et retenue en rotation par des moyens de blocage,
- un porte-taraud, comportant des moyens pour recevoir et retenir un taraud, muni d'un tronçon fileté engagé fonctionnellement dans l'alésage taraudé de la patronne, et comportant un tronçon d'entraînement,
- un arbre d'entraînement monté rotatif, comportant un alésage recevant en coulissement longitudinal le tronçon d'entraînement du porte-taraud, et sollicité en rotation par une transmission mécanique actionnée par un moteur,
- des moyens de protection pour autoriser un déplacement axial de retrait de la patronne vers l'intérieur du carter depuis une position de référence jusque dans une première position proximale de recul selon une première course de pénétration déterminée pendant laquelle des premiers moyens de rappel élastiques rappellent en permanence la patronne vers sa position de référence,
   dans laquelle les moyens de protection autorisent en outre un déplacement axial supplémentaire de retrait de la patronne vers l'intérieur du carter depuis la première position proximale de recul jusque dans une seconde position proximale de recul selon une seconde course de pénétration déterminée pendant laquelle la patronne n'est plus rappelée vers l'extérieur du carter.

De tels moyens de protection permettent, au-delà de la première course de pénétration, de libérer le taraud de toute contrainte exercée par les premiers moyens de rappel élastiques. La patronne et le taraud peuvent ainsi librement reculer vers l'intérieur du carter selon une seconde course de pénétration, qui peut être très importante, sans que le taraud soit soumis à des contraintes susceptibles de le briser ou de le forcer à s'engager d'une façon incorrecte dans un trou à tarauder inexistant ou mal centré par rapport au taraud.

On limite ainsi efficacement le risque de bris de taraud. En outre, on évite la réalisation de taraudages défectueux et on permet la reprise ultérieure des pièces à tarauder, ce qui limite le nombre de pièces défectueuses en fin de production.

En pratique, on peut avantageusement prévoir des moyens assurant le débrayage des premiers moyens de rappel élastiques lorsque la patronne atteint la première position proximale de recul.

Avantageusement, on peut prévoir que les moyens de protection comprennent :
- au moins un logement radial femelle prévu dans la douille de patronne et débouchant radialement sur sa surface extérieure,
- au moins un élément de verrouillage, monté coulissant radialement dans un canal transversal immobile par rapport au carter, déplaçable entre une position d'engagement dans laquelle ledit élément de verrouillage s'engage partiellement dans ledit logement radial femelle en restant guidé dans ledit canal transversal, et une position de libération dans laquelle ledit élément de verrouillage est hors dudit logement radial femelle,
- les premiers moyens de rappel élastiques sollicitent en permanence ledit élément de verrouillage, directement ou indirectement, vers sa position d'engagement.

La position de référence est ainsi déterminée par les moyens de verrouillage lorsque ceux-ci sont engagés dans le logement radial femelle. Un tel système présente également l'avantage d'être facilement réversible pour ramener la patronne dans sa position de référence, et ce uniquement par une action délibérée d'un opérateur.

De préférence, on peut prévoir que :
- l'élément de verrouillage est une bille sphérique,
- le canal transversal comporte une portion à première pente oblique par rapport à la direction axiale de déplacement du taraud,
- les premiers moyens de rappel élastiques sollicitent l'élément de verrouillage selon la direction axiale contre la portion à première pente oblique,
- la portion à première pente oblique est orientée de façon à amener radialement l'élément de verrouillage en position d'engagement sous la sollicitation axiale des premiers moyens de rappel élastiques.

Une telle disposition permet de transformer l'effort produit axialement par les premiers moyens de rappel élastiques en un effort radial. La place dont on dispose radialement est en effet trop limitée pour parvenir à loger des premiers moyens de rappel élastiques capables d'un effort de rappel satisfaisant. Avantageusement, on peut prévoir que :
- le logement radial femelle se développe selon la direction axiale de déplacement du taraud entre une extrémité proximale et une extrémité distale et comporte, à son extrémité distale, une seconde pente oblique par rapport à la direction axiale de déplacement du taraud,
- la seconde pente oblique est orientée de façon à amener l'élément de verrouillage hors du logement radial femelle lorsque la patronne est déplacée vers la première position proximale de recul.

La seconde pente oblique permet ainsi de sortir l'élément de verrouillage de façon progressive hors du logement radial femelle, jusqu'à atteindre la première position proximale de recul après laquelle l'élément de verrouillage sort du logement radial femelle, assurant le débrayage ou l'inhibition des premiers moyens de rappel élastiques.

Avantageusement, on peut prévoir que la position de référence et la seconde position proximale de recul sont distantes d'environ 20 mm. Une telle distance correspond sensiblement à la majorité de la longueur des courses de taraudage qui sont effectuées. Avec une telle distance séparant la position de référence et la seconde position proximale de recul, on s'assure de ne jamais contraindre le taraud jusqu'à le briser dans la plupart des taraudages à réaliser.

De préférence, on peut prévoir que les moyens de protection autorisent un déplacement axial limité d'avance de la patronne vers l'extérieur du carter à l'encontre de seconds moyens de rappel élastiques depuis la position de référence jusque dans une position distale d'avance selon une course d'avance déterminée.

On permet ainsi au taraud de suivre d'éventuels mouvements parasites de la pièce à tarauder et/ou d'éviter de brusquer le taraud lors de son retrait hors du trou taraudé.

Avantageusement, on peut prévoir que le logement radial femelle est allongé selon la direction axiale de déplacement du taraud de façon à autoriser une course axiale de déplacement de l'élément de verrouillage dans le logement radial femelle, de préférence selon une longueur d'environ 2 mm.

Avantageusement, on peut prévoir que :
- le logement radial femelle comporte, à son extrémité proximale, une troisième pente oblique par rapport à la direction axiale de déplacement du taraud,
- la troisième pente oblique est orientée de telle sorte que, en position distale d'avance, elle coopère avec la première pente oblique pour maintenir l'élément de verrouillage bloqué en position d'engagement.

Les moyens de protection assurent ainsi la protection du taraud tant lors d'un mouvement de retrait que lors d'un mouvement d'avance de la patronne. Le système est alors très compact.

De préférence, l'unité de taraudage peut comporter des moyens de détection du déplacement de la patronne au-delà de la première position proximale de recul.

Les moyens de détection peuvent produire un signal avertissant l'opérateur du fonctionnement anormal de l'unité de taraudage, afin que celui-ci corrige le problème dès que possible. En alternative ou en complément, les moyens de détection peuvent produire un signal permettant d'arrêter l'unité de taraudage et la chaîne de production afin d'éviter la production de pièces défectueuses.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en coupe d'un mode de réalisation d'unité de taraudage selon l'invention selon une première direction diamétrale, la patronne étant en position de référence ;
- la figure 2 est une vue en coupe de l'unité de taraudage de la figure 1 selon une seconde direction diamétrale, la patronne étant en position de référence ;
- la figure 3 est une vue en coupe de l'unité de taraudage de la figure 1 selon la deuxième direction diamétrale, la patronne étant en première position proximale de recul ;
- la figure 4 est une vue en coupe de l'unité de taraudage de la figure 1 selon la seconde direction diamétrale, la patronne étant en cours de déplacement au-delà de la première position proximale de recul ;
- la figure 5 est une vue en coupe de l'unité de taraudage de la figure 1 selon la seconde direction diamétrale, la patronne étant en seconde position proximale de recul ;
- la figure 6 est une vue en coupe de l'unité de taraudage de la figure 1 selon la seconde direction diamétrale, la patronne étant en position distale d'avance ;
- la figure 7 est une vue de détail de l'unité de taraudage de la figure 2 ; et
- la figure 8 est une vue en coupe transversale de l'unité de taraudage de la figure 2.

### DESCRIPTION DES MODES DE REALISATION PREFERES

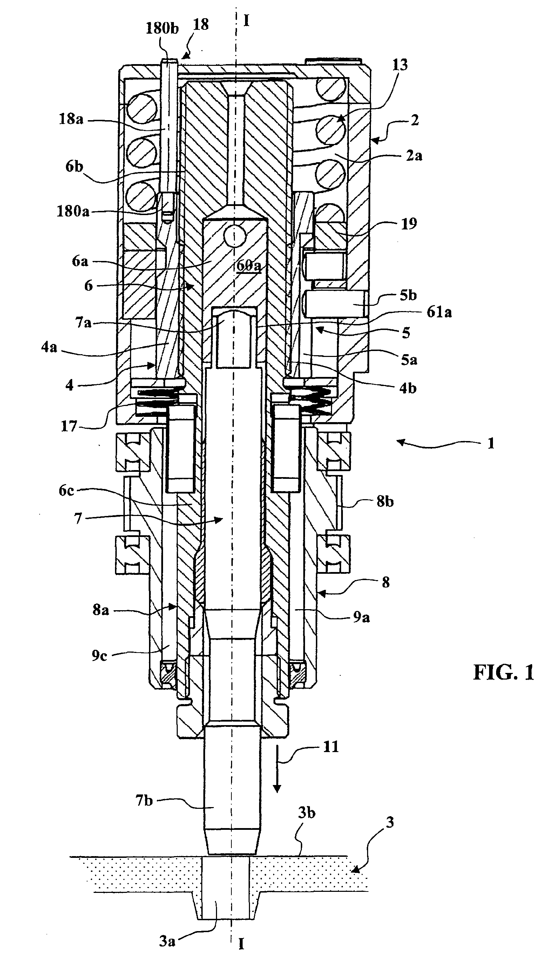

Un mode de réalisation d'unité de taraudage 1 selon l'invention est illustré sur les figures 1 à 6.

On voit plus particulièrement sur la figure 1 que l'unité de taraudage 1 comprend :
- un carter 2 destiné à être fixé au regard d'une pièce à usiner 3 sur un support d'une machine d'usinage telle qu'une presse (non représentée), et ayant un logement intérieur 2a,
- une patronne 4, comportant une douille 4a à alésage taraudé 4b, engagée axialement à coulissement dans le logement intérieur 2a du carter 2 et retenue en rotation par des moyens de blocage 5,
- un porte-taraud 6, comportant des moyens 6a pour recevoir et retenir un taraud 7, muni d'un tronçon fileté 6b engagé fonctionnellement dans l'alésage taraudé 4b de la patronne 4, et comportant un tronçon d'entraînement 6c,
- un arbre d'entraînement 8 monté rotatif, comportant un alésage 8a recevant en coulissement longitudinal le tronçon d'entraînement 6c du porte-taraud 6, et sollicité en rotation par une transmission mécanique (non représentée) actionnée par un moteur.

On voit plus particulièrement sur la figure 1 que les moyens de blocage 5 en rotation de la patronne 4 comprennent une rainure longitudinale 5a s'étendant selon une direction axiale I-I, coopérant avec une goupille transversale 5b en prise dans le carter 2 et pénétrant dans la rainure longitudinale 5a.

Les moyens 6a pour recevoir et retenir le taraud 7 comportent une douille 60a engagée et bloquée en rotation selon la direction axiale I-I dans le porte-taraud 6. La douille 60a comporte une empreinte 61 a recevant l'extrémité proximale 7a du taraud 7 et l'entraînant en rotation par coopération de forme. L'empreinte 61 a est ici carrée, mais peut présenter une forme différente pour recevoir des tarauds 7 d'un autre standard.

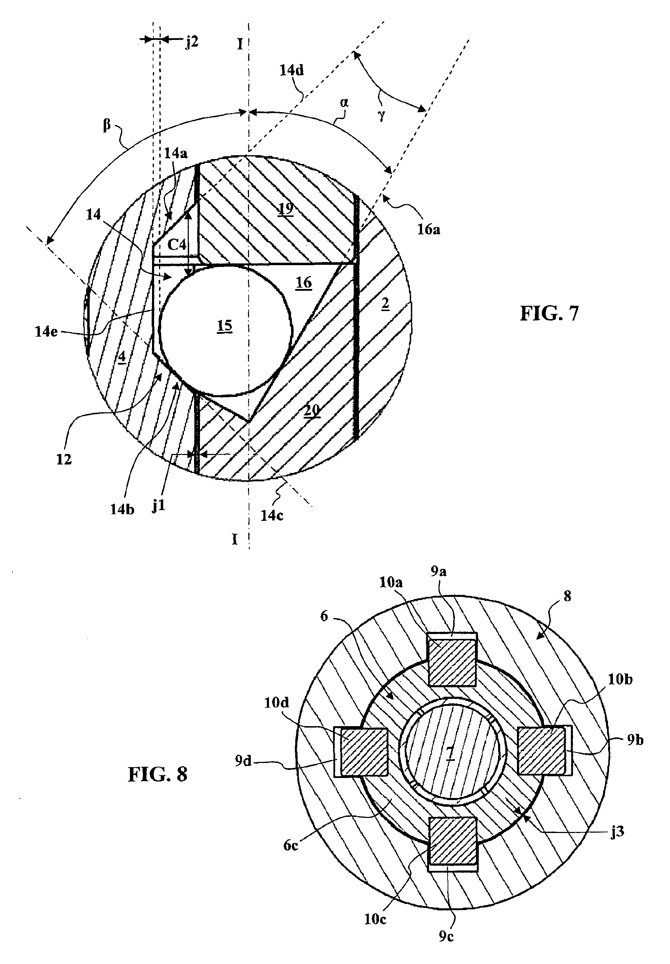

On voit plus particulièrement sur les figures 1 à 6 que l'arbre d'entraînement 8 comporte une denture externe 8b pour être entraîné en rotation selon la direction axiale I-I par la transmission mécanique. L'arbre d'entraînement 8 comporte quatre rainures longitudinales 9a à 9d dans lesquelles peuvent coulisser longitudinalement selon la direction axiale I-I quatre clavettes 10a à 10d solidaires du tronçon d'entraînement 6c du porte-taraud 6 (figure 8).

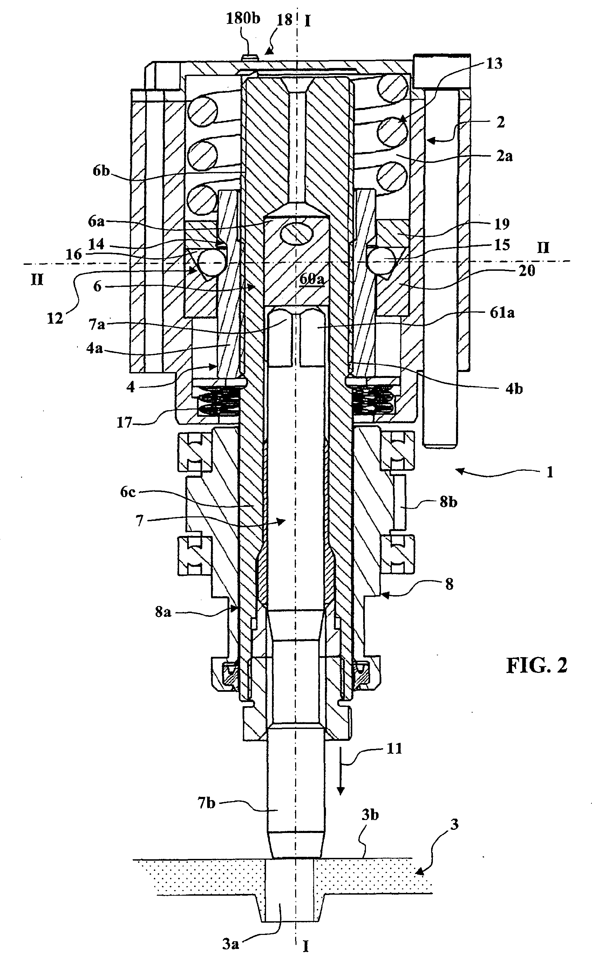

Dans un fonctionnement normal de l'unité de taraudage 1, l'arbre d'entraînement 8 est sollicité en rotation selon la direction axiale I-I, entraînant simultanément, par l'intermédiaire des clavettes 10a à 10d, le porte-taraud 6. La patronne 4 est alors immobile dans une position de référence illustrée sur les figures 1 et 2. Du fait de la rotation du porte-taraud 6 et de la liaison filetée entre le porte-taraud 6 et la patronne 4, le porte-taraud 6 se déplace selon un mouvement de translation illustré par la flèche 11. Le taraud 7 réalise ainsi un taraudage dans la pièce à usiner 3 en venant se visser dans le trou 3a à tarauder.

Dans le cas où la pièce à usiner 3 présente un trou à tarauder 3a qui est excentré par rapport à la direction axiale I-I de façon trop importante pour que le taraud 7 y pénètre, le taraud 7 vient buter contre la surface supérieure 3b de la pièce à usiner 3 et est empêché d'avancer selon le mouvement illustré par la flèche 11.

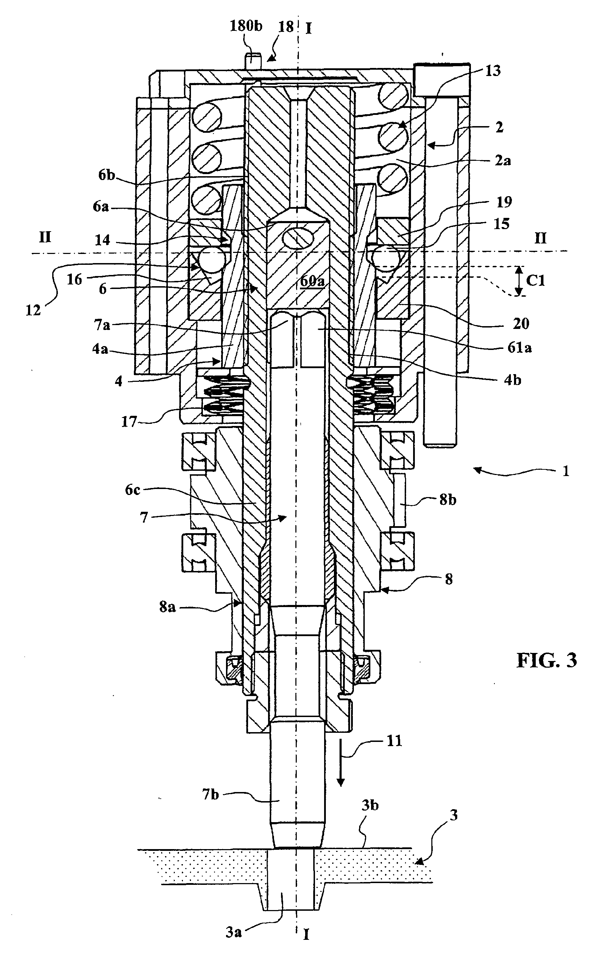

Pour éviter le bris du taraud 7, des moyens de protection 12 (plus particulièrement visibles sur la figure 2) autorisent un déplacement axial de retrait de la patronne 4 vers l'intérieur du carter 2 depuis la position de référence (figures 1 et 2) jusque dans une première position proximale de recul (figure 3) selon une première course de pénétration déterminée C1 pendant laquelle des premiers moyens de rappel élastiques 13 rappellent en permanence la patronne 4 vers sa position de référence.

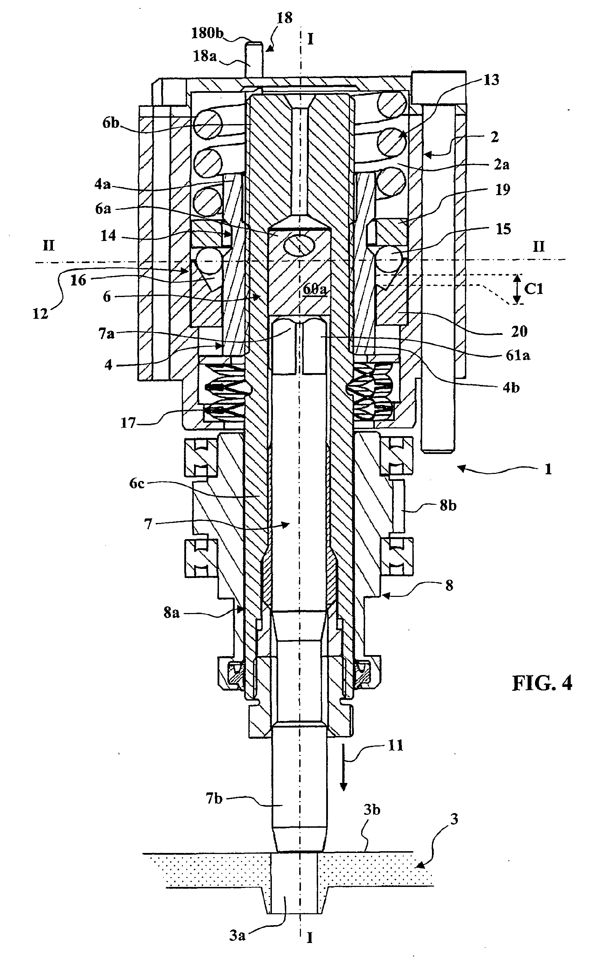

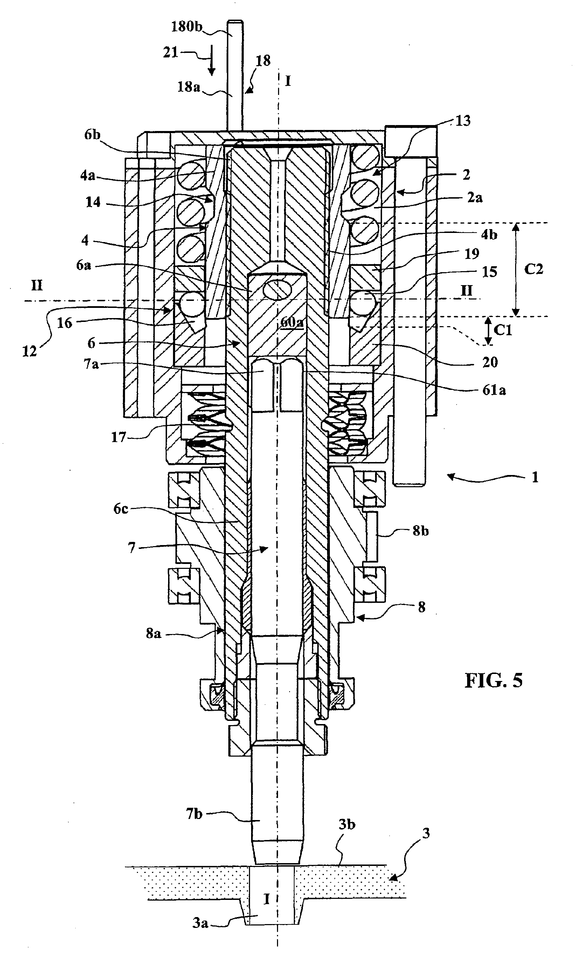

On voit plus particulièrement sur les figures 4 et 5 que les moyens de protection 12 autorisent en outre un déplacement axial supplémentaire de retrait de la patronne 4 vers l'intérieur du carter 2 depuis la première position proximale de recul (figure 3) jusque dans une seconde position proximale de recul (figure 5) selon une seconde course de pénétration déterminée C2 pendant laquelle la patronne 4 n'est plus rappelée vers l'extérieur du carter 2.

On voit plus particulièrement sur les figures 2 à 6 que les moyens de protection 12 comprennent :
- une pluralité de logements radiaux femelles 14 prévus dans la douille 4a de la patronne 4 et débouchant radialement sur sa surface extérieure,
- une pluralité d'éléments de verrouillage 15 montés coulissants radialement selon une direction radiale II-II dans un canal transversal 16 immobile par rapport au carter 2, déplaçables entre une position d'engagement (figure 2) dans laquelle lesdits éléments de verrouillage 15 s'engagent partiellement dans lesdits logements radiaux femelles 14 en restant guidés dans lesdits canaux transversaux 16 et une position de libération (figures 3 à 5) dans laquelle lesdits éléments de verrouillage 15 sont hors desdits logements radiaux femelles 14,
- les premiers moyens de rappel élastiques 13 sollicitent indirectement en permanence ledit élément de verrouillage 15 vers sa position d'engagement (figure 2).

Les canaux transversaux 16 sont pratiqués dans une bague annulaire 20 qui est immobile par rapport au carter 2.

En l'espèce, on voit plus particulièrement sur les figures 2 à 6 que :
- les éléments de verrouillage 15 sont des billes sphériques,
- les canaux transversaux 16 comportent respectivement une portion à première pente oblique 16a par rapport à la direction axiale I-I de déplacement du taraud 7 (figure 7).

Les premiers moyens de rappel élastiques 13 sollicitent les éléments de verrouillage 15 selon la direction axiale I-I contre la portion à première pente oblique 16a par l'intermédiaire d'une bague annulaire 19. La portion à première pente oblique 16a est orientée de façon à amener radialement les éléments de verrouillage 15 en position d'engagement sous la sollicitation axiale des premiers moyens de rappel élastiques 13. Pour ce faire, la portion à première pente oblique 16a fait un angle α d'environ 30° avec la direction axiale I-I de déplacement du taraud 7 (figure 7).

On voit plus particulièrement sur la figure 7 que les logements radiaux femelles 14 se développent selon la direction axiale I-I de déplacement du taraud 7 entre une extrémité proximale 14a et une extrémité distale 14b et comportent, à leur extrémité distale 14b, une seconde pente 14c oblique par rapport à la direction axiale I-I de déplacement du taraud 7. La seconde pente oblique 14c est orientée de façon à amener les éléments de verrouillage 15 hors du logement radial femelle 14 lorsque la patronne 4 est déplacée vers la première position proximale de recul. Pour ce faire, la seconde pente oblique 14c fait un angle β d'environ 45° avec la direction axiale I-I de déplacement du taraud 7.

Les valeurs des angles α et β ainsi que la raideur des premiers moyens de rappel élastiques 13 (qui sont ici un ressort hélicoïdal) pourront être adaptées en fonction de la force de maintien que l'on souhaite appliquer sur la patronne 4 et en fonction de la force à partir de laquelle on souhaite déplacer la patronne 4 au-delà de la première position proximale de recul sans qu'une contrainte axiale soit exercée sur le taraud 7.

De bons résultats ont été obtenus en choisissant des premiers moyens de rappel élastiques 13 et des angles α et β de telle façon que la patronne 4 ne peut être déplacée au-delà de sa position de référence que par un effort axial exercé sur le taraud 7 supérieur à environ 600 N. Le taraud 7 est ainsi maintenu selon une force de maintien suffisante pour effectuer les taraudages.

Pour éviter le risque de bris du taraud 7, de bons résultats ont été obtenus en choisissant des premiers moyens de rappel élastiques 13 et des angles α et β de telle sorte que la patronne 4 est déplacée au-delà de la première position proximale de recul lorsqu'un effort axial supérieur à environ 730 N est appliqué sur le taraud 7.

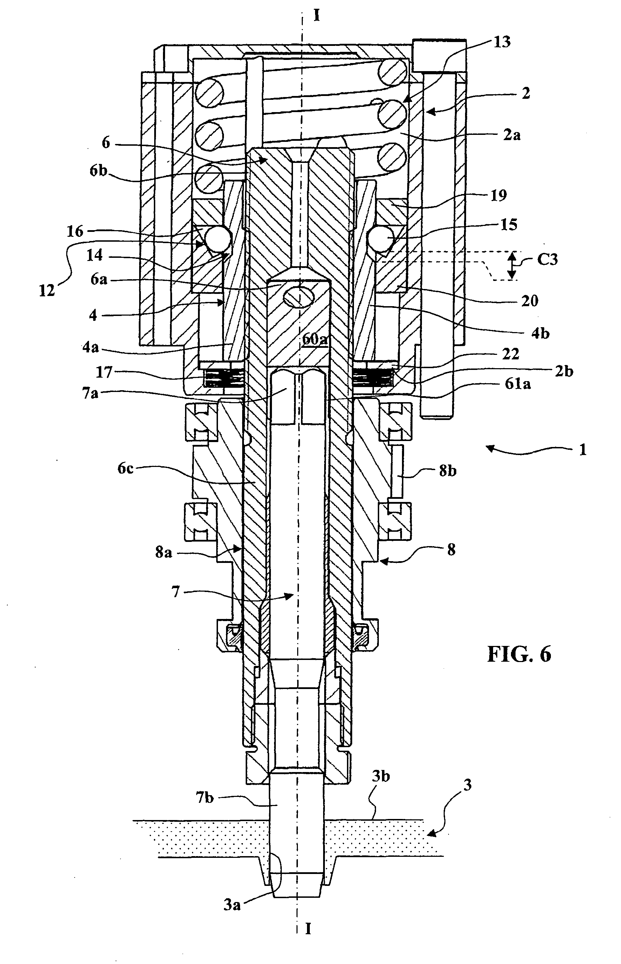

On voit plus particulièrement sur les figures 6 et 7 que les moyens de protection 12 autorisent également un déplacement axial limité d'avance du taraud 7 vers l'extérieur du carter 2 à l'encontre de seconds moyens de rappel élastiques 17 depuis la position de référence jusque dans une position distale d'avance selon une course d'avance déterminée C3. On permet ainsi au taraud 7 de suivre les mouvements parasites de la pièce à usiner 3 sans que cela endommage le taraud 7 et/ou le taraudage qui est en train d'être réalisé.

Pour permettre cette course d'avance déterminée C3, on observe plus particulièrement sur la figure 7 que les logements radiaux femelles 14 sont allongés selon la direction axiale I-I de déplacement du taraud 7 de façon à autoriser une course axiale de déplacement C4 des éléments de verrouillage 15 dans les logements radiaux femelles 14. La course axiale de déplacement C4 est sensiblement égale à la course d'avance déterminée C3.

Pour limiter la course d'avance déterminée C3, les logements radiaux femelles 14 comportent, à leur extrémité proximale 14a, une troisième pente 14d oblique par rapport à la direction axiale I-I de déplacement du taraud 7. La troisième pente oblique 14d est orientée de telle sorte que, en position distale d'avance (figure 6), elle coopère avec la première pente oblique 16a pour maintenir les éléments de verrouillage 15 bloqués en position d'engagement.

De façon avantageuse, on peut prévoir que la troisième pente oblique 14d est sensiblement parallèle à la première pente oblique 16a et/ou sensiblement perpendiculaire à la seconde pente oblique 14c.

Dans le mode de réalisation illustré sur les figures 1 à 8, on voit plus particulièrement sur la figure 7 que la troisième pente oblique 14d et la première pente oblique 16a forment entre elles un angle aigu y. En fin de course d'avance déterminée C3, les moyens de verrouillage 15 sont ainsi maintenus pressés en position d'engagement par un effet de coin par la coopération de la première pente oblique 16a et de la troisième pente oblique 14d.

De façon pratique, la réalisation des seconde 14c et troisième 14d pentes obliques peut être effectuée par l'usinage de logements radiaux femelles 14 débouchant radialement sur la surface extérieure de la douille 4a de patronne 4 selon un chanfrein portant les seconde 14c et troisième 14d pentes obliques.

De façon à permettre au taraud 7 de s'engager dans un trou à tarauder 3a dans le cas d'un faible décentrage du trou à tarauder 3a par rapport à la direction axiale I-I, on prévoit des moyens pour autoriser un léger déplacement radial limité du taraud 7 dans le carter 2 autour d'une position radiale moyenne. En l'espèce, la position radiale moyenne est celle dans laquelle le taraud 7 est centré par rapport à la direction axiale I-I. Pour autoriser le léger déplacement radial du taraud 7, on voit plus particulièrement sur les figures 7 et 8 qu'on a prévu des jeux radiaux j1, j2 et j3. Le jeu radial j1 est situé entre la bague annulaire 20 et la patronne 4. Le jeu radial j2 est prévu entre les éléments de verrouillage 15 et le fond 14e des logements radiaux femelles 14. Le jeu radial j3 est prévu entre l'arbre d'entraînement 8 et le tronçon d'entraînement 6c du porte-taraud 6.

Les premiers moyens de rappel élastiques 13 rappellent, par l'intermédiaire des éléments de verrouillage 15 et des première 16a et seconde 14c pentes obliques, le taraud 7 en position radiale moyenne centrée par rapport à la direction axiale I-I.

Le fonctionnement de l'unité de taraudage 1 selon l'invention est expliqué plus en détails ci-après au moyen des figures 2 à 6.

Avant que le taraud 7 ne soit entraîné en rotation selon la direction axiale I-I, celui-ci affleure selon son extrémité distale 7b le trou à tarauder 3a. Dans le cas représenté sur les figures 2 à 5, le trou à tarauder 3a est excentré par rapport à la direction axiale I-I de telle sorte que le taraud 7 ne peut pas s'engager dans le trou à tarauder 3a.

L'arbre d'entraînement 8 est alors entraîné en rotation selon la direction axiale I-I par une transmission mécanique actionnée par un moteur. L'arbre d'entraînement 8 entraîne, par l'intermédiaire des clavettes 10a à 10d, le porte-taraud 6 et donc le taraud 7. Du fait de la liaison hélicoïdale entre le porte-taraud 6 et la patronne 4, le taraud 7 avance vers l'extérieur du carter 2 selon un mouvement illustré par la flèche 11 et vient buter sur la surface supérieure 3b de la pièce à usiner 3. Le taraud 7 ne parvient pas à pénétrer dans le trou à tarauder 3a, ce dernier étant trop excentré par rapport à la direction axiale I-I pour que les moyens de déplacement radial limité du taraud 7 permettent de compenser cette excentricité.

Sous l'effet de l'entraînement par l'arbre d'entraînement 8, le taraud 7 et le porte-taraud 6 poursuivent leur mouvement de rotation selon la direction axiale I-I mais restent immobiles en translation selon la direction axiale I-I par rapport au carter 2 : le taraud 7 « patine » contre la surface supérieure 3b. La patronne 4 est alors déplacée depuis sa position de référence (figure 2) vers sa première position proximale de recul (figure 3) selon la première course de pénétration déterminée C1.

Ce déplacement de la patronne 4 est autorisé par la sortie progressive des éléments de verrouillage 15 hors des logements radiaux femelles 14 et par la compression progressive des premiers moyens de rappel élastiques 13.

Une fois la patronne 4 en première position proximale de recul (figure 3), si le taraud 7 ne parvient toujours pas à s'engager dans le trou à tarauder 3a sous l'effort axial exercé par les premiers moyens de rappel élastiques 13, la patronne est déplacée au-delà de la première position proximale de recul vers la seconde position proximale de recul (figure 4 et 5).

Pendant le déplacement de la patronne 4 entre la première position proximale de recul et la seconde position proximale de recul, les éléments de verrouillage 15 sont en dehors des logements radiaux femelles 14 et portent en appui contre la surface extérieure cylindrique de la douille 4a de la patronne 4. De la sorte, les moyens de rappel élastiques 13 sont automatiquement débrayés ou inhibés, en ce sens qu'ils n'appliquent plus d'effort axial important sur le taraud 7, voire plus du tout. Le déplacement de la patronne 4 selon la seconde course de pénétration déterminée C2 se fait seulement à l'encontre d'un effort de frottement des éléments de verrouillage 15 contre la douille 4a de la patronne 4, effort qui est très réduit.

Pendant son déplacement, la patronne 4 n'est pas déplacée en rotation par rapport au carter 2, ce qui permet de conserver les cotes de réglage de taraudage.

On voit plus particulièrement sur les figures 1 et 2 à 5 que l'unité de taraudage 1 comporte des moyens de détection 18 du déplacement de la patronne 4 au-delà de la première position proximale de recul. En l'espèce, les moyens de détection 18 comportent une tige axiale 18a reliée par son extrémité distale 180a à la patronne 4 et dépassant selon son extrémité distale 180b hors du carter 2 (figure 1). Lors du déplacement de la patronne 4 jusque dans sa seconde position proximale de recul, le dépassement de la tige axiale 18a hors du carter 2 augmente jusqu'à une position maximale de dépassement illustrée sur la figure 5. La tige axiale 18a peut être utilisée pour actionner un moyen d'avertissement de l'opérateur et/ou des moyens d'arrêt de la chaîne de production. '

La tige axiale 18a peut en outre être utilisée comme moyen de replacement de la patronne 4 en position de référence en appliquant une poussée sur la tige axiale 18a selon le mouvement illustré par la flèche 21 (figure 5).

En alternative, pour ramener la patronne 4 dans sa position de référence, il est possible de piloter l'arbre d'entraînement 8 en rotation inverse selon la direction axiale I-I. Le porte-taraud 6, également entraîné en rotation inverse selon la direction axiale I-I, entraînera ainsi, par l'intermédiaire de sa liaison filetée avec la patronne 4, la patronne 4 vers sa position de référence.

De bons résultats ont été obtenus en prévoyant une première course de pénétration C1 d'environ 2,5 mm et une seconde course de pénétration C2 d'environ 17,5 mm, ce qui procure une distance d'environ 20 mm entre la position de référence et la seconde position proximale de la patronne 4.

Une telle première course de pénétration C1 permet de parvenir à engager le taraud 7 dans le trou à tarauder 3a dans le cas d'un faible défaut de centrage de ce dernier par rapport à la direction axiale I-I sans pour autant exercer des contraintes sur le taraud 7 pouvant conduire à sa rupture.

Une telle distance d'environ 20 mm entre la position de référence et la seconde position proximale de recul permet de sécuriser le taraud 7 dans la plupart des applications de taraudage, la majeure partie des applications de taraudage exploitant une course de taraudage inférieure ou égale à 20 mm.

Dans le cas où le taraud 7 est parvenu à s'engager dans le trou à tarauder 3a, il se peut que la pièce à usiner 3 subisse des mouvements parasites ayant tendance à déplacer le taraud 7 vers l'extérieur du carter 2. Dans ce cas, on voit plus particulièrement sur la figure 6 que la patronne 4 peut être déplacée depuis sa position de référence jusque dans une position distale d'avance selon la course d'avance déterminée C3 qui s'effectue à l'encontre des seconds moyens de rappel élastiques 17 qui sont ainsi comprimés par l'intermédiaire d'une bague annulaire 22.

La troisième pente oblique 14d et la première pente oblique 16a interrompent le déplacement de la patronne 4, par exemple après une course d'avance C3 d'environ 2 mm. En alternative ou en complément, la course d'avance C3 peut être limitée par la bague annulaire 22 venant indirectement en butée contre le carter 2 par l'intermédiaire des seconds moyens de rappel élastiques 17 en fin de compression, ou venant directement en butée contre un épaulement 2b du carter 2 (figure 6).

La présente invention n'est pas limitée aux modes de réalisation qui ont été explicitement décrits, mais, elle en inclut les diverses variantes et généralisations contenues dans le domaine des revendications ci-après.

## Revendications

1. Unité de taraudage (1), comprenant :
- un carter (2) destiné à être fixé au regard d'une pièce à usiner (3) sur un support d'une machine d'usinage telle qu'une presse, et ayant un logement intérieur (2a),
- une patronne (4), comportant une douille (4a) à alésage taraudé (4b), engagée axialement à coulissement dans le logement intérieur (2a) du carter (2) et retenue en rotation par des moyens de blocage (5),
- un porte-taraud (6), comportant des moyens (6a) pour recevoir et retenir un taraud (7), muni d'un tronçon fileté (6b) engagé fonctionnellement dans l'alésage taraudé (4b) de la patronne (4), et comportant un tronçon d'entraînement (6c),
- un arbre d'entraînement (8) monté rotatif, comportant un alésage (8a) recevant en coulissement longitudinal le tronçon d'entraînement (6c) du porte-taraud (6), et sollicité en rotation par une transmission mécanique actionnée par un moteur,
- des moyens de protection (12) pour autoriser un déplacement axial de retrait de la patronne (4) vers l'intérieur du carter (2) depuis une position de référence jusque dans une première position proximale de recul selon une première course de pénétration déterminée (C1) pendant laquelle des premiers moyens de rappel élastiques (13) rappellent en permanence la patronne (4) vers sa position de référence,
**caractérisée en ce que** les moyens de protection (12) autorisent en outre un déplacement axial supplémentaire de retrait de la patronne (4) vers l'intérieur du carter (2) depuis la première position proximale de recul jusque dans une seconde position proximale de recul selon une seconde course de pénétration déterminée (C2) pendant laquelle la patronne (4) n'est plus rappelée vers l'extérieur du carter (2).

2. Unité de taraudage (1) selon la revendication 1, **caractérisée en ce que** les moyens de protection (12) comprennent :
- au moins un logement radial femelle (14) prévu dans la douille (4a) de patronne (4) et débouchant radialement sur sa surface extérieure,
- au moins un élément de verrouillage (15), monté coulissant radialement dans un canal transversal (16) immobile par rapport au carter (2), déplaçable entre une position d'engagement dans laquelle ledit élément de verrouillage (15) s'engage partiellement dans ledit logement radial femelle (14) en restant guidé dans ledit canal transversal (16) et une position de libération dans laquelle ledit élément de verrouillage (15) est hors dudit logement radial femelle (14),
- les premiers moyens de rappel élastiques (13) sollicitent en permanence ledit élément de verrouillage (15), directement ou indirectement, vers sa position d'engagement.

3. Unité de taraudage (1) selon l'une des revendications 1 ou 2, **caractérisée en ce que** :
- l'élément de verrouillage (15) est une bille sphérique,
- le canal transversal (16) comporte une portion à première pente oblique (16a) par rapport à la direction axiale (I-I) de déplacement du taraud (7),
- les premiers moyens de rappel élastiques (13) sollicitent l'élément de verrouillage (15) selon la direction axiale (I-I) contre la portion à première pente oblique (16a),
- la portion à première pente oblique (16a) est orientée de façon à amener radialement l'élément de verrouillage (15) en position d'engagement sous la sollicitation axiale des premiers moyens de rappel élastiques (13).

4. Unité de taraudage (1) selon la revendication 3, **caractérisée en ce que** la première pente oblique (16a) fait un angle (α) d'environ 30° avec la direction axiale (I-I) de déplacement du taraud (7).

5. Unité de taraudage (1) selon l'une des revendications 3 ou 4, **caractérisée en ce que** :
- le logement radial femelle (14) se développe selon la direction axiale (I-I) de déplacement du taraud (7) entre une extrémité proximale (14a) et une extrémité distale (14b) et comporte, à son extrémité distale (14b), une seconde pente (14c) oblique par rapport à la direction axiale (I-I) de déplacement du taraud (7),
- la seconde pente oblique (14c) est orientée de façon à amener l'élément de verrouillage (15) hors du logement radial femelle (14) lorsque la patronne (4) est déplacée vers la première position proximale de recul.

6. Unité de taraudage (1) selon la revendication 5, **caractérisée en ce que** la seconde pente oblique (14c) fait un angle (β) d'environ 45° avec la direction axiale (I-I) de déplacement du taraud (7).

7. Unité de taraudage (1) selon l'une quelconque des revendications 1 à 6, **caractérisée en ce que** les premiers moyens de rappel élastiques (13) sont dimensionnés de telle façon que la patronne (4) ne peut être déplacée au-delà de la position de référence que par un effort axial supérieur à environ 600 N.

8. Unité de taraudage (1) selon l'une quelconque des revendications 1 à 6, **caractérisée en ce que** les premiers moyens de rappel élastiques (13) sont dimensionnés de telle façon que la patronne (4) ne peut être déplacée au-delà de la première position proximale de recul que par un effort axial supérieur à environ 730 N.

9. Unité de taraudage (1) selon l'une quelconque des revendications 1 à 8, **caractérisée en ce que** la position de référence et la première position proximale de recul sont distantes d'environ 2,5 mm.

10. Unité de taraudage (1) selon l'une quelconque des revendications 1 à 9, **caractérisée en ce que** la position de référence et la seconde position proximale de recul sont distantes d'environ 20 mm.

11. Unité de taraudage (1) selon l'une quelconque des revendications 1 à 10, **caractérisée en ce que** les moyens de protection (12) autorisent un déplacement axial limité d'avance de la patronne (4) vers l'extérieur du carter (2) à l'encontre de seconds moyens de rappel élastiques (17) depuis la position de référence jusque dans une position distale d'avance selon une course d'avance déterminée (C3).

12. Unité de taraudage (1) selon la revendication 11, **caractérisée en ce que** le logement radial femelle (14) est allongé selon la direction axiale (I-I) de déplacement du taraud (7) de façon à autoriser une course axiale de déplacement (C4) de l'élément de verrouillage (15) dans le logement radial femelle (14), de préférence selon une longueur d'environ 2 mm.

13. Unité de taraudage (1) selon l'une des revendications 11 ou 12, **caractérisée en ce que** :
- le logement radial femelle (14) comporte, à son extrémité proximale (14a), une troisième pente oblique (14d) par rapport à la direction axiale (I-I) de déplacement du taraud (7),
- la troisième pente oblique (14d) est orientée de telle sorte que, en position distale d'avance, elle coopère avec la première pente oblique (16a) pour maintenir l'élément de verrouillage (15) bloqué en position d'engagement.

14. Unité de taraudage (1) selon la revendication 13, **caractérisée en ce que** la troisième pente oblique (14d) est sensiblement parallèle à la première pente oblique (16a) et/ou sensiblement perpendiculaire à la seconde pente oblique (14c).

15. Unité de taraudage (1) selon la revendication 14, **caractérisée en ce que** le logement radial femelle (14) débouche radialement sur la surface extérieure de la douille (4a) de patronne (4) selon un chanfrein portant les seconde (14c) et troisième (14d) pentes obliques.

16. Unité de taraudage (1) selon l'une quelconque des revendications 1 à 15, **caractérisée en ce qu'**elle comporte des moyens (j1, j2, j3) pour autoriser un léger déplacement radial limité du taraud (7) dans le carter (2) autour d'une position radiale moyenne.

17. Unité de taraudage (1) selon l'une quelconque des revendications 1 à 16, **caractérisé en ce qu'**elle comporte des moyens de détection (18) du déplacement de la patronne (4) au-delà de la première position proximale de recul.

## Patentansprüche

1. Gewindeschneideinheit (1), umfassend:
- ein Gehäuse (2), das dazu bestimmt ist, in Bezug auf ein Werkstück (3) auf einem Träger einer Werkzeugmaschine, wie z.B. einer Presse, befestigt zu werden, und mit einem Lagerbett (2a),
- eine Hülse (4), die eine Buchse (4a) mit einer Gewindebohrung (4b) enthält, die axial verschiebbar in das Lagerbett (2a) des Gehäuses (2) eingreift und durch Verriegelungsmittel (5) gegen ein Verdrehen gehalten ist,
- ein Gewindebohrerhalter (6), der Mittel (6a) zum Aufnehmen und Halten eines Gewindebohrers (7) enthält, der mit einem Kopfabschnitt (6b) ausgestattet ist, der funktionell in die Gewindebohrung (4b) der Hülse (4) eingreift und der einen anzutreibenden Abschnitt (6c) enthält,
- eine drehbar gelagerte Antriebswelle (8), die eine Bohrung (8a) enthält, in der der anzutreibende Abschnitt (6c) des Gewindebohrerhalters (6) in Längsrichtung gleitbeweglich aufgenommen ist und durch ein von einem Motor angetriebenes mechanisches Getriebe in Drehung versetzt wird,
- Schutzmittel (12) zum Ermöglichen einer axialen Auslenkverschiebung der Hülse (4) in das Innere des Gehäuses (2) ausgehend von einer Referenzposition bis zu einer ersten proximalen Rücklaufposition auf einem vorbestimmten ersten Eindringweg (C1), währenddessen die ersten elastischen Rückstellmittel (13) die Hülse (4) ständig gegen die Referenzposition rückstellen,
**dadurch gekennzeichnet, dass**
die Schutzmittel (12) außerdem eine zusätzliche axiale Auslenkverschiebung der Hülse (4) ins Innere des Gehäuses (2) ausgehend von der ersten proximalen Rücklaufposition bis hin zu einer zweiten proximalen Rücklaufposition auf einem vorbestimmten zweiten Eindringweg (C2) ermöglichen, währenddessen die Hülse (4) nicht mehr in Richtung des Äußeren des Gehäuses (2) rückgestellt wird.

2. Gewindeschneideinheit (1) nach Anspruch 1, **dadurch gekennzeichnet, dass** die Schutzeinrichtung (12) enthält:
- wenigstens eine radiale Aufnahmenut (14), die an der Buchse (4a) der Hülse (4) vorgesehen ist und die sich mit ihrer Oberfläche radial nach außen hin öffnet,
- wenigstens ein Sperrelement (15), das auf einem Querkanal (16) radial verschiebbar und in Bezug auf das Gehäuse (2) unbeweglich angebracht ist und das zwischen einer Eingriffsposition, in der das besagte Sperrelement (15) teilweise in die besagte radiale Aufnahmenut (14) eingreift und durch den besagten Querkanal (16) geführt bleibt, und einer gelösten Position geschoben werden kann, in der sich das besagte Sperrelement (15) außerhalb der genannten radialen Aufnahmenut (14) befindet,
- wobei die ersten elastischen Rückstellmitteln (13) das besagte Sperrelement (15) direkt oder indirekt ständig gegen ihre Eingriffsposition drücken.

3. Gewindeschneideinheit (1) nach einem der Ansprüche 1 oder 2, **dadurch gekennzeichnet, dass:**
- das Sperrelement (15) eine sphärische Kugel ist,
- der Querkanal (16) einen ersten schräg geneigten Abschnitt (16a) in Bezug auf die axiale Richtung (I-I) der Auslenkverschiebung des Gewindebohrers (7) aufweist,
- die ersten elastischen Rückstellmittel (13) das Sperrelement (15) in die axiale Richtung (I-I) entgegen dem ersten schräg geneigten Abschnitt (16a) drücken,
- der erste schräg geneigte Abschnitt (16a) derart radial ausgerichtet ist, dass eine axiale Betätigung der ersten elastischen Rückstellmittel (13) die Positionierung des Sperrelementes (15) in der Eingriffsposition zur Folge hat.

4. Gewindeschneideinheit (1) nach Anspruch 3, **dadurch gekennzeichnet, dass**der erste schräg geneigte Abschnitt (16a) zur axialen Richtung (I-I) der Auslenkverschiebung des Gewindebohrers (7) mit einem Winkel (α) von etwa 30° ausgebildet ist.

5. Gewindeschneideinheit (1) nach einem der Ansprüche 3 oder 4, **dadurch gekennzeichnet, dass:**
- die radiale Aufnahmenut (14) entlang der axialen Richtung (I-I) der Auslenkverschiebung des Gewindebohrers (7) verläuft, an einem hinteren Ende (14a) und einem vorderen Ende (14b) eintritt und an ihrem vorderen Ende (14b) eine zweiten schräg geneigten Abschnitt (14c) enthält, der bezüglich der axialen Richtung (I-I) der Auslenkverschiebung des Gewindebohrers (7) ausgerichtet ist, und
- der zweite schräg geneigte Abschnitt (14c) derart ausgerichtet ist, dass das Sperrelement (15) aus der radialen Aufnahmenut (14) geschoben wird, wenn die Hülse (4) zur ersten beabstandeten Grenzposition bewegt wird.

6. Gewindeschneideinheit (1) nach Anspruch 5, **dadurch gekennzeichnet, dass** der zweite schräg geneigten Abschnitt (14c) zur axialen Richtung (I-I) der Auslenkverschiebung des Gewindebohrers (7) mit einem Winkel (*β*) von etwa 45 ° ausgebildet ist.

7. Gewindeschneideinheit (1) nach einem der Ansprüche 1 bis 6, **dadurch gekennzeichnet, dass** die ersten elastischen Rückstellmittel (13) derart dimensioniert sind, dass die Hülse (4) nur dann aus der Referenzposition verschoben wird, wenn eine axiale Kraft 600N übersteigt.

8. Gewindeschneideinheit (1) nach einem der Ansprüche 1 bis 6, **dadurch gekennzeichnet, dass** die ersten elastischen Rückstellmittel (13) derart dimensioniert sind, dass die Hülse (4) nur dann aus ersten beabstandeten Grenzposition verschoben wird, wenn eine axiale Kraft 730N übersteigt.

9. Gewindeschneideinheit (1) nach einem der Ansprüche 1 bis 8, **dadurch gekennzeichnet, dass** die Referenzposition und die erste beabstandete Grenzposition etwa 2,5 mm voneinander beabstandet sind.

10. Gewindeschneideinheit (1) nach einem der Ansprüche 1 bis 9, **dadurch gekennzeichnet, dass** die Referenzposition und die zweite beabstandete Grenzposition etwa 20 mm voneinander beabstandet sind.

11. Gewindeschneideinheit (1) nach einem der Ansprüche 1 bis 10, **dadurch gekennzeichnet, dass** die Schutzmittel (12) eine begrenzte axiale Vorschubbewegung der Hülse (4) in Richtung zur Außenseite des Gehäuses (2) gegen die zweiten elastischen Rückstellmittel (17) hin von der Referenzposition bis zu einer distalen Vorschubposition längs einer vorbestimmten Vorschubweges (C3) möglich ist.

12. Gewindeschneideinheit (1) nach Anspruch 11, **dadurch gekennzeichnet, dass** die radiale Aufnahmenut (14) entlang der axialen Richtung (I-I) der Verschiebung des Gewindebohrers (7) langgezogen ist, um dem Sperrelement (15) eine axiale Verschiebung (C4) in die radiale Aufnahmenut (14) vorzugweise auf einer Länge von 2 mm zu ermöglichen.

13. Gewindeschneideinheit (1) nach einem der Ansprüche 11 oder 12, **dadurch gekennzeichnet, dass:**
- die radiale Aufnahmenut (14) an ihrem proximalen Ende (14a), einen dritten schräg geneigten Abschnitt (14d) zur axialen Richtung (I-I) der Auslenkverschiebung des Gewindebohrers (7) aufweist, und
- der dritte schräg geneigte Abschnitt (14d) derart ausgerichtet ist, dass er in einer distalen Vorschubposition mit dem ersten schräg geneigten Abschnitt (16a) zusammenwirkt, um das Sperrelement (15) in der Eingriffsposition zu blockieren.

14. Gewindeschneideinheit (1) nach Anspruch 13, **dadurch gekennzeichnet, dass** der dritte schräg geneigte Abschnitt (14d) im wesentlichen parallel zum ersten schräg geneigten Abschnitt (16a) und/oder im wesentlichen rechtwinklig zum zweiten geneigten Abschnitt (14c) steht.

15. Gewindeschneideinheit (1) nach Anspruch 14, **dadurch gekennzeichnet, dass** die radiale Aufnahmenut (14) über eine Fase bezüglich dem zweiten (14c) und dritten (14d) schräg geneigten Abschnitt radial in die äußere Oberfläche der Buchse (4a) der Hülse (4) mündet.

16. Gewindeschneideinheit (1) nach einem der Ansprüche 1 bis 15, **dadurch gekennzeichnet, dass** sie Mittel (j1, j2, j3) aufweist, um eine begrenzte radiale Verschiebung des Gewindebohrers (7) in dem Gehäuse (2) um eine mittlere radiale Position herum zu ermöglichen.

17. Gewindeschneideinheit (1) nach einem der Ansprüche 1 bis 16, **dadurch gekennzeichnet, dass** sie Mittel (18) zum Erfassen der Verschiebung der Hülse (4) über erste beabstandete Grenzposition hinaus umfasst.

## Claims

1. Tapping unit (1), comprising:
- a casing (2) intended to be fixed in front of a workpiece (3) to be machined on a support of a machine tool such as a press, and having an interior housing (2a),
- a master template (4), including a bush (4a) with a threaded bore (4b), axially engaged to slide inside the interior housing (2a) of the casing (2) and retained in rotation by locking means (5),
- a tap-holder (6), including means (6a) for receiving and retaining a tap (7), provided with a threaded section (6b) functionally engaged in the threaded bore (4b) of the master template (4), and including a driving section (6c),
- a rotatably mounted drive shaft (8), including a bore (8a) receiving in longitudinal sliding the drive section (6c) of the tap-holder (6), and loaded in rotation by a mechanical transmission actuated by a motor,
- protection means (12) for allowing axial retraction movement of the master template (4) toward the interior of the casing (2) from a reference position to a first proximal retraction position over a first particular penetration stroke (C1) over which first spring-loading means (13) continuously urge the master template (4) toward its reference position,
**characterized in that** the protection means (12) further allow a supplementary retraction axial movement of the master template (4) toward the interior of the casing (2) from the first proximal retraction position to a second proximal retraction position over a second particular penetration stroke (C2) over which the master template (4) is no longer urged toward the exterior of the casing (2).

2. Tapping unit (1) as claimed in claim 1, **characterized in that** the protection means (12) comprise:
- at least one radial female housing (14) provided in the bush (4a) of the master template (4) and opening radially onto its exterior surface,
- at least one locking element (15) mounted to slide radially in a transverse passage (16) immobile relative to the casing (2), movable between an engagement position in which said locking element (15) is partially engaged in said radial female housing (14) whilst remaining guided in said transverse passage (16), and a release position in which said locking element (15) is outside said radial female housing (14),
- the first spring-loading means (13) continuously urging said locking element (15) directly or indirectly toward its engagement position.

3. Tapping unit (1) as claimed in either of claims 1 or 2, **characterized in that**:
- the locking element (15) is a spherical ball,
- the transverse passage (16) includes a portion with a first oblique slope (16a) relative to the axial direction (I-I) of movement of the tap (7),
- the first spring-loading means (13) urge the locking element (15) in the axial direction (I-I) against the portion with the first oblique slope (16a),
- the portion with the first oblique slope (16a) is oriented in such a manner as to move the locking element (15) radially into an engagement position as a result of the axial loading of the first spring-loading means (13).

4. Tapping unit (1) as claimed in claim 3, **characterized in that** the first oblique slope (16a) is at an angle (α) of approximately 30° to the axial direction (I-I) of movement of the tap (7).

5. Tapping unit (1) as claimed in either of claims 3 or 4, **characterized in that**:
- the radial female housing (14) extends in the axial direction (I-I) of movement of the tap (7) between a proximal end (14a) and a distal end (14b) and has, at its distal end (14b), a second slope (14c) oblique relative to the axial direction (I-I) of movement of the tap (7),
- the second oblique slope (14c) is oriented in such a manner as to move the locking element (15) out of the radial female housing (14) when the master template (4) is moved toward the first proximal retraction position.

6. Tapping unit (1) as claimed in claim 5, **characterized in that** the second oblique slope (14c) is at an angle (β) of approximately 45° to the axial direction (I-I) of movement of the tap (7).

7. Tapping unit (1) as claimed in any one of claims 1 to 6, **characterized in that** the first spring-loading means (13) are dimensioned in such a manner that the master template (4) can be moved beyond the reference position only by an axial force exceeding approximately 600 N.

8. Tapping unit (1) as claimed in any one of claims 1 to 6, **characterized in that** the first spring-loading means (13) are dimensioned in such a manner that the master template (4) can be moved beyond the first proximal retraction position only by an axial force exceeding approximately 730 N.

9. Tapping unit (1) as claimed in any one of claims 1 to 8, **characterized in that** the reference position and the first proximal retraction position are approximately 2,5 mm apart.

10. Tapping unit (1) as claimed in any one of claims 1 to 9, **characterized in that** the reference position and the second proximal retraction position are approximately 20 mm apart.

11. Tapping unit (1) as claimed in any one of claims 1 to 10, **characterized in that** the protection means (12) allow limited forward axial movement of the master template (4) toward the exterior of the casing (2) against second spring-loading means (17) from the reference position to a distal forward position over a particular forward stroke (C3).

12. Tapping unit (1) as claimed in claim 11, **characterized in that** the radial female housing (14) is elongate in the axial direction (I-I) of movement of the tap (7) in such a manner as to allow an axial movement stroke (C4) of the locking element (15) in the radial female housing (14), preferably of approximately 2 mm length.

13. Tapping unit (1) as claimed in either of claims 11 or 12, **characterized in that**:
- the radial female housing (14) has, at its proximal end (14a), a third slope (14d) oblique relative to the axial direction (I-I) of movement of the tap (7),
- the third oblique slope (14d) is oriented in such a manner that, in the distal forward position, it cooperates with the first oblique slope (16a) to lock the locking element (15) in the engagement position.

14. Tapping unit (1) as claimed in claim 13, **characterized in that** the third oblique slope (14d) is substantially parallel to the first oblique slope (16a) and/or substantially perpendicular to the second oblique slope (14c).

15. Tapping unit (1) as claimed in claim 14, **characterized in that** the radial female housing (14) opens radially onto the exterior surface of the bush (4a) of the master template (4) via a chamfer bearing the second oblique slope (14c) and the third oblique slope (14d).

16. Tapping unit (1) as claimed in any one of claims 1 to 15, **characterized in that** it includes means (j1, j2, j3) for allowing small limited radial movement of the tap (7) in the casing (2) about a radial mean position.

17. Tapping unit (1) as claimed in any one of claims 1 to 16, **characterized in that** it includes means (18) for detecting movement of the master template (4) beyond the first proximal retraction position.
